# EUROPÄISCHE PATENTSCHRIFT

(11) **EP 3 875 846 B1**
(45) Veröffentlichungstag und Bekanntmachung des Hinweises auf die Patenterteilung: **03.01.2024**
(21) Anmeldenummer: 20160394.1
(22) Anmeldetag: 02.03.2020
(51) Int. Cl.: F21S 41/20, F21S 41/25, F21S 41/50, B60Q 1/068, B60Q 1/00

(54) **KRAFTFAHRZEUGSCHEINWERFER**
MOTOR VEHICLE HEADLAMP
PHARES DE VÉHICULE AUTOMOBILE

(43) Veröffentlichungstag der Anmeldung: 08.09.2021
(73) Patentinhaber: ZKW Group GmbH, 3250 Wieselburg (AT)
(72) Erfinder: Steinkellner, Johann, 3684 St. Oswald (AT)
(74) Vertreter: Patentanwaltskanzlei Matschnig & Forsthuber OG

(56) Entgegenhaltungen:
- EP-A2- 0 512 793
- EP-A2- 2 623 370
- JP-A- 2014 154 410
- US-A- 5 047 903
- US-A1- 2017 350 567
- US-A1- 2019 154 223
- US-A1- 2020 032 974
- US-B1- 9 651 212

## Beschreibung

Die Erfindung betrifft einen Kraftfahrzeugscheinwerfer gemäß dem Oberbegriff von Anspruch 1.

Weiters betrifft die Erfindung ein Kraftfahrzeug mit zumindest einem solchen Kraftfahrzeugscheinwerfer, wobei der zumindest eine Kraftfahrzeugscheinwerfer als Hauptscheinwerfer an einer Fahrzeugfront oder als Rückleuchte an einer Hinterseite des Kraftfahrzeuges angeordnet ist.

Fahrzeugscheinwerfer, bei welchen in einem Gehäuse des Fahrzeugscheinwerfers, hinter einer Abschlussscheibe ein oder mehrere Lichtmodule angeordnet sind, sind hinlänglich bekannt. Die Lichtmodule dienen zur Erzeugung unterschiedlicher Lichtverteilungen, beispielsweise zur Erzeugung einer Abblendlichtverteilung, Fernlichtverteilung, Tagfahrlichtverteilung, segmentierten Lichtverteilungen usw.

Fahrzeugscheinwerfer mit einem Auswölbungsbereich sind aus US 2017/350567 A1 bekannt.

Die Veröffentlichungen JP 2014 154410 A sowie EP 2 623 370 A2 zeigen Fahrzeugscheinwerfer mit einer Abschlussscheibe, welche eine Basisfläche mit einem Auswölbungsbereich aufweisen. EP0512793 A2 zeigt einen Fahrzeugscheinwerfer, wobei die horizontale Verschwenkachse des Lichtmoduls in seinem vorderen Bereich, welcher innerhalb der Abschlussscheibe liegt, verläuft.

Die Lichtmodule befinden sich geschützt hinter der zumindest bereichsweise, in der Regel ganzflächig lichtdurchlässig/transparent ausgebildeten Abschlussscheibe. Typischerweise können die Abschlussscheiben unterschiedliche, an eine Kraftfahrzeugfront angepasste Formen, insbesondere in horizontaler und vertikaler Richtung definierte Krümmungen aufweisen. Zumeist sind typische Abschlussscheiben glatt, also ohne Strukturierung ausgebildet, können aber auch zumindest bereichsweise, aber auch vollflächig eine Strukturierung aufweisen.

Es ist eine Aufgabe der Erfindung, eine Möglichkeit zu schaffen, dass bei einem Verschwenken keine Teile des Lichtmoduls an einer Auswölbungsbegrenzungsfläche zur Anlage kommen.

Diese Aufgabe wird mit einem eingangs genannten Kraftfahrzeugscheinwerfer mit den technischen Merkmalen des Kennzeichens des Anspruchs 1 gelöst.

Der Begriff "Integrations-Lichtmodul" soll dabei lediglich zum Ausdruck bringen, dass es sich um ein Lichtmodul handelt, welches einem Auswölbungsbereich zugeordnet ist und zumindest mit Teilen bzw. Abschnitten in "seinem" Auswölbungsbereich angeordnet ist. Grundsätzlich kann ein erfindungsgemäßer Fahrzeugscheinwerfer auch noch ein oder mehrere "herkömmliche" Lichtmodule aufweisen, die sich in bekannter Weise hinter der Abdeckscheibe, bei einem erfindungsgemäßen Scheinwerfer also hinter der Basisfläche der Abschlussscheibe befinden. Mit dem Begriff "Integrations-Lichtmodul" wird somit eine sprachliche Unterscheidung zwischen diesen Lichtmodulen vorgenommen.

Unter dem Begriff "Vorne", "vorderer Bereich" etc. ist vorzugsweise jener Bereich etc. zu verstehen, in dem die Lichtaustrittsfläche eines Lichtmoduls liegt, bzw. liegt dort vorzugsweise jener Bereich eines Lichtmoduls, aus welchem das Licht zur Erzeugung einer gewünschten Lichtverteilung etc. austritt. Die Begriffe "oben", "unten", etc. beziehen vorzugsweise sich auf eine Einbaulage des Kraftfahrzeugscheinwerfers in einem Kraftfahrzeug.

Abschlussscheiben aus dem Stand der Technik weisen abgesehen von allfälligen Strukturierungen (dann auch als Streuscheiben bezeichnet) eine im Wesentlichen glatte Lichtaustrittsfläche auf, d.h. diese weist keine signifikanten Erhebungen oder Einbuchtungen auf.

Bei der vorliegenden Erfindung hingegen sind ein oder mehrere Auswölbungsbereiche zur Aufnahme vorzugsweise zumindest eines Teiles eines Integrations-Lichtmoduls vorgesehen. Dadurch kann z.B. erreicht werden, dass ein optischer Eindruck entsteht, als ob ein einzelnes Lichtmodul oder einzelne Lichtmodule direkt in die Kraftfahrzeugfront integriert wären, obwohl diese nach wie vor hinter der Abschlussscheibe und von dieser geschützt angeordnet sind.

Es kann vorgesehen sein, dass die gesamte Auswölbungsbegrenzungsfläche zumindest eines Auswölbungsbereiches, vorzugsweise aller Auswölbungsbereiche lichtdurchlässig ist.

Es kann, insbesondere fertigungstechnisch, von Vorteil sein, wenn die gesamte Auswölbungsbegrenzungsfläche lichtdurchlässig ausgebildet ist. Es kann aber auch vorgesehen sein, dass nur ein jener Bereich der Auswölbungsbegrenzungsfläche vor dem Integrations-Lichtmodul bzw. einer Optik, etwa einer Projektionslinse des Integrations-Lichtmodul, transparent ist, auf welchen aus dem Integrations-Lichtmodul austretendes Licht auftrifft. Je näher das Integrations-Lichtmodul an der Abschlussscheibe, d.h. an der Auswölbungsbegrenzungsfläche angeordnet ist, umso kleiner kann dieser transparente Bereich sein. Vorzugsweise ist dieser transparente Bereich zumindest so groß wie der Bereich, aus dem Licht aus dem Integrations-Lichtmodul austritt bzw. so groß wie der austretende Lichtkegel.

Es kann vorgesehen sein, dass die Basisfläche der Abschlussscheibe lichtundurchlässig ausgebildet ist. Dazu kann z.B. die Abschlussscheibe aus unterschiedlichen Materialen hergestellt sein, z.B. kann die Abschlussscheibe aus 2 Materialien (2K) gefertigt sein, wobei die Auswölbungsbegrenzungsfläche oder Teile davon lichtdurchlässig sind, während die Basisfläche lichtundurchlässig ausgebildet ist. Entsprechend kann Licht eines Integrations-Lichtmoduls aus dem Scheinwerfer austreten, von Außen ist aber eine Einsicht in den Scheinwerfer bzw. in das Gehäuse hinein weitestgehend verhindert.

Es kann aber auch vorgesehen sein, dass die Basisfläche der Abschlussscheibe (auch) lichtdurchlässig ausgebildet ist, und wobei vorzugsweise in einem Inneren des Gehäuses hinter der Abdeckscheibe, insbesondere hinter der Basisfläche eine lichtundurchlässige Blende angeordnet ist.

In diesem Fall ist die Abschlussscheibe einfacher herzustellen und kann z.B. in ihrer Gesamtheit lediglich aus einem einzigen, transparenten Material gebildet sein. In diesem Fall ist eine lichtundurchlässige Blende zweckmäßig, sodass von Außen kein Einblick in den Scheinwerfer gegeben ist.

Vorzugsweise ist einem Auswölbungsbereich genau ein Integrations-Lichtmodul zugeordnet, d.h. es befindet sich der vordere Teil lediglich vor diesem einen, zugeordneten Integrations-Lichtmodul in dem Auswölbungsbereich.

Unter Lichtmodul bzw. geometrische Auslegung/Definition des Lichtmoduls werden alle Bestandteile des Lichtmoduls verstanden bzw. tragen alle Bestandteile des Lichtmoduls, z.B. auch Trägerelemente oder generell mechanische Bestandteile ohne optische Funktion bei. Zur dynamischen Verstellung der Ausrichtung des emittierten Lichtbündels und/oder zur Einstellung einer Grundposition ist vorzugsweise vorgesehen, dass ein oder insbesondere alle Integrations-Lichtmodule oder jeweils Bestandteile des jeweiligen Integrations-Lichtmoduls verschwenkbar sind.

Es ist vorgesehen, dass das gesamte Integrations-Lichtmodul verschwenkbar ist oder ein Integrations-Lichtmodul jeweils derart verschwenkbar ist, dass zumindest oder lediglich Bestandteile des Integrations-Lichtmoduls oder jene Bestandteile des Integrations-Lichtmoduls, die sich in einem Auswölbungsbereiche befinden, verschwenkbar sind.

Dabei ist ein Integrations-Lichtmodul oder seine verschwenkbaren Bestandteile zumindest um eine Verschwenkachse, vorzugsweise um zwei Verschwenkachsen, z.B. lediglich um eine horizontale Verschwenkachse oder lediglich um eine vertikale Verschwenkachse, oder um eine vertikale Verschwenkachse und eine horizontale Verschwenkachse verschwenkbar ist/ sind.

Insbesondere kann vorgesehen sein, dass die horizontale Verschwenkachse eines Integrations-Lichtmoduls quer zu einer optischen Achse des Integrations-Lichtmoduls, insbesondere normal zu der optischen Achse verläuft.

Zumindest eine der Verschwenkachsen, vorzugsweise beide Verschwenkachsen verlaufen in einem vorderen Bereich des Integrations-Lichtmoduls, d.h. in einem Bereich des Integrations-Lichtmoduls, welcher innerhalb des Auswölbungsbereiches liegt.

Wenn ein Integrations-Lichtmodul um zwei Verschwenkachsen verschwenkbar ist, stehen diese vorzugsweise normal aufeinander und vorzugsweise schneiden sie sich in einem Punkt

Die zumindest eine Verschwenkachse, vorzugsweise alle Verschwenkachsen eines Integrations-Lichtmoduls verlaufen durch einen Scheitelpunkt dieses Integrations-Lichtmoduls, d.h. durch den vordersten Punkt des Integrations-Lichtmoduls.

Beispielsweise ist vorgesehen, dass ein bzw. jedes Integrations-Lichtmodul eine Optik, insbesondere eine Abbildungs- bzw. Projektionsoptik, etwa in Form einer Linse, insbesondere einer Projektionslinse, oder mit einer Linse, insbesondere mit einer Projektionslinse aufweist.

In diesem Fall entspricht vorzugsweise der Scheitelpunkt der Linse (Projektionslinse) dem Scheitelpunkt des Integrations-Lichtmoduls.

Weiters ist es günstig, wenn beim Übergang von der Basisfläche in einen Auswölbungsbereich eine Öffnung in der Basisfläche vorgesehen ist, wobei vorzugsweise diese Öffnung von einer Blende, etwa einer ringförmigen Blende umgeben ist, wobei die ringförmige Blende in Form eines Teilringes oder eines geschlossenen Ringes ausgebildet ist, oder die Blende in Form eines in Richtung Gehäuseinnerem sich verjüngenden Kegelmantel ausgebildet ist.

Diese, beispielsweise ringförmige, Blende bildet eine Art Kragen, welche in Richtung des Gehäuseinneren gerichtet ist. Sie verhindert einen Einblick in das Innere des Scheinwerfers. Vorzugsweise ist diese Blende bzw. jede Blende mit der Abschlussscheibe einstückig ausgebildet.

Weiters ist mit Vorteil vorgesehen, dass sich jener Bereich des Integrations-Lichtmoduls, welcher sich in dem Auswölbungsbereich befindet bzw. in diesen hineinragt, in Lichtaustrittsrichtung bzw. in Richtung einer optischen Achse, von dem Gehäuse weggerichtet, weniger stark verjüngt als die Auswölbungsbegrenzungsfläche des Auswölbungsbereiches und/oder sich weniger stark verjüngt als die Blende in dieser Richtung, und/oder sich jener Bereich des Integrations-Lichtmoduls, welcher sich in dem Auswölbungsbereich befindet bzw. in diesen hineinragt, in Lichtaustrittsrichtung bzw. in Richtung einer optischen Achse, von dem Gehäuse weggerichtet, zumindest in Ebenen, auf welche eine Verschwenkachse normal steht, weniger stark verjüngt als die Auswölbungsbegrenzungsfläche des Auswölbungsbereiches und/oder sich weniger stark verjüngt als die Blende in dieser Richtung.

Auf diese Weise kann sichergestellt werden, dass bei einem Verschwenken keine Teile des Lichtmoduls an den Auswölbungsbegrenzungsfläche zur Anlage kommen.

Weiters kann mit Vorteil aus den oben genannten Gründen vorgesehen, dass eine Lichtaustrittsfläche des Integrations-Lichtmoduls, beispielsweise eine Lichtaustrittsfläche der Optik, insbesondere Projektionsoptik bzw. Projektionslinse stärker gekrümmt ist als die Auswölbungsbegrenzungsfläche der zugeordneten Auswölbung.

Zweckmäßig ist es, wenn der Kraftfahrzeugscheinwerfer ein oder mehrere Verstellsysteme umfasst, welches bzw. welche zum Verschwenken von zumindest einem Integrations-Lichtmodul um zumindest eine seiner Verschwenkachsen, vorzugsweise zum Verschwenken von zwei oder mehreren Integrations-Lichtmodulen, insbesondere jeweils um eine Verschwenkachse des jeweiligen Integrations-Lichtmoduls, eingerichtet ist/ sind.

Im Folgenden ist die Erfindung an Hand der Zeichnung näher erläutert. In dieser zeigt
Fig. 1 einen erfindungsgemäßen Fahrzeugscheinwerfer in einer perspektivischen Frontansicht auf die Abdeckscheibe des Fahrzeugscheinwerfers mit Auswölbungsbereichen,
Fig. 2 eine Rückansicht des in Figur 1 gezeigten Teils eines Fahrzeugscheinwerfers mit zwei Integrations-Lichtmodulen,
Fig. 3 einen Vertikalschnitt mit eingezeichneter Drehachse durch den Aufbau aus Figur 1 und 2, und
Fig. 4 einen Horizontalschnitt durch den Aufbau auf Figur 1 und 2.

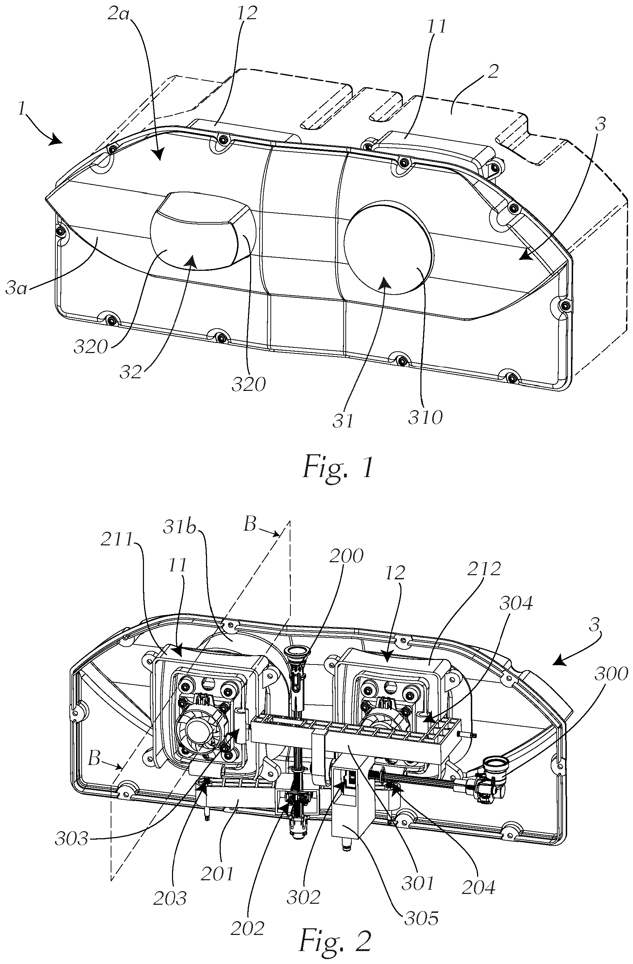

**Figur 1** zeigt einen Kraftfahrzeugscheinwerfer 1 für ein Kraftfahrzeug, wobei der Kraftfahrzeugscheinwerfer 1 ein Gehäuse 2 mit einer Gehäuseöffnung 2a umfasst, welche von einer Abschlussscheibe 3 abgeschlossen ist. In dem Gehäuse 2 sind ein oder mehrere, im konkreten Fall zwei Lichtmodule 11, 12 angeordnet, welche zur Emission von Licht eingerichtet sind, welches Licht durch die Abschlussscheibe 3 durchtreten kann.

Die Lichtmodule 11, 12 dienen beispielsweise zur Erzeugung einer Lichtverteilung, wie einer Abblend- oder Fernlichtverteilung etc.

Die Abschlussscheibe 3 weist eine Basisfläche 3a auf. Bei einer herkömmlichen Abschlussscheibe ist diese Basisfläche lichtdurchlässig und die die Lichtmodule sitzen vollständig im Gehäuse hinter dieser Basisfläche.

Bei der vorliegenden Erfindung kann die Basisfläche 3a auch lichtdurchlässig sein und es können hinter dieser auch in bekannter Weise ein oder mehrere Lichtmodule angeordnet sein.

Es kann bei der vorliegenden Erfindung aber auch vorgesehen sein, dass die Basisfläche 3a lichtundurchlässig ist.

In jedem Fall verfügt die Basisfläche 3a über eine oder mehrere, im konkreten Fall zwei von der Basisfläche 3a nach Außen (also z.B. in etwa in Fahrtrichtung bei einem Frontscheinwerfer oder in Rückfahrrichtung bei einem Heckscheinwerfer gewölbt, oder generell von dem Gehäuse weg gewölbt) gerichtete bzw. gewölbte Auswölbungsbereiche 31, 32. Die Auswölbungsbereiche 31, 32 weisen dabei keine Öffnungen etc. auf, sodass die Abschlussscheibe 3 ein durchgehendes Element ist, welches das Gehäuse 2 gegen Umwelteinflüsse wie eine herkömmliche, aus dem Stand der Technik bekannte Abschlussscheibe abschließt.

Jedem dieser Auswölbungsbereiche 31, 31 ist ein Lichtmodul zugeordnet. Solche einem Auswölbungsbereich 31, 32 zugeordnete Lichtmodule werden im Folgenden als "Integrations-Lichtmodul" bezeichnet.

Die Auswölbungsbegrenzungsflächen 310, 320 sind zumindest bereichsweise lichtdurchlässig ausgebildet ist, sodass von einem Integrations-Lichtmodul 11, 12 emittiertes Licht durch die Abschlussscheibe 3 austreten kann. Es kann auch vorgesehen sein, dass jeweils die gesamte Auswölbungsbegrenzungsfläche 310, 320 lichtdurchlässig ausgebildet ist.

Vorzugsweise sind beim Übergang von der Basisfläche 3a in einen jeweiligen Auswölbungsbereich 31, 32 die entsprechenden Öffnungen/ Ausnehmungen in der Basisfläche 3a, welche in den jeweiligen Auswölbungsbereich münden, jeweils von einer ringförmigen Blende 31b, 32b umgeben, wobei die ringförmige Blende 31b, 32b in Form eines Teilringes oder wie gezeigt in Form eines geschlossenen Ringes oder in Form eines sich in Richtung Gehäuseinnerem verjüngender Kegelmantel ausgebildet ist. Diese z.B. ringförmige Blende 31b, 32b bildet eine Art Kragen, welche in Richtung des Gehäuseinneren gerichtet ist. Sie verhindert einen Einblick in das Innere des Scheinwerfers.

**Figur 2** zeigt zwei solcher Integrations-Lichtmodule 11, 12, welche in dem Gehäuse 2 hinter ihrem jeweiligen Auswölbungsbereich 31, 32 angeordnet sind. Ein Integrations-Lichtmodul 31, 31 zeichnet sich dabei jeweils dadurch aus, dass es derart in dem Fahrzeugscheinwerfer 1 angeordnet ist, dass zumindest ein Teil, insbesondere ein vorderer Teil des Integrations-Lichtmoduls 11, 12 in seinen Auswölbungsbereich 31, 32 hinein ragt.

Dabei ist der Auswölbungsbereich 31, 32, in welchen ein Integrations-Lichtmodul 11, 12 hineinragt, geometrisch derart bestimmt, dass in den Auswölbungsbereich 31, 32 hineinragende Bestandteile des Integrations-Lichtmoduls 11, 12 sich in einem Abstand größer Null zu einer den Auswölbungsbereich 31, 32 definierenden bzw. begrenzenden Auswölbungsbegrenzungsfläche 310, 320 (**Figur 1**) befinden.

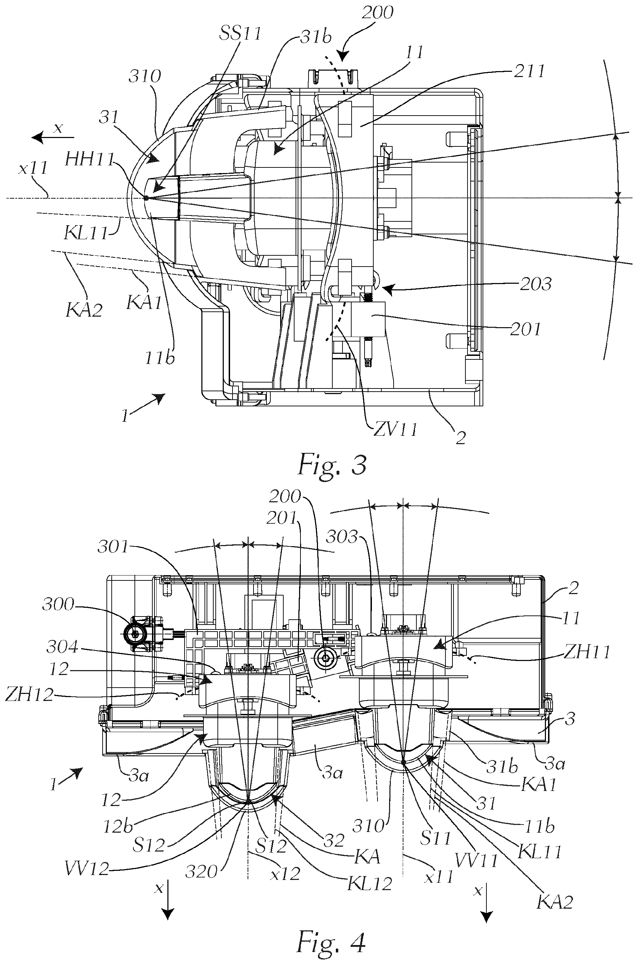

**Figur 3** zeigt z.B. in einem Vertikalschnitt (Ebene B-B aus **Figur 2**) einen vorderen Teil 111 des Integrations-Lichtmoduls 11, der in den von der Auswölbungsbegrenzungsfläche 310 begrenzten Auswölbungsbereich 31 hineinragt.

In den gezeigten Beispielen umfasst ein Integrations-Lichtmodul 31, 32 in einem vorderen Bereich jeweils eine Optik, insbesondere eine Projektionsoptik oder Projektionslinse 11b, 12b, welche Licht, welches von einer Lichtquelle (nicht dargestellt; beispielsweise ein oder mehrere LED's), gegebenenfalls nach Umformung durch weitere optische Elemente (Reflektor, Lichtleiter, etc.) von der Projektionslinse 11b, 12b in Form eines Lichtbündels zur Bildung einer gewünschten Lichtverteilung abgestrahlt wird.

Zumindest eine solche Optik, insbesondere Projektionslinse 11b, 12b ist unter dem Begriff "vorderer Teil des Integrations-Lichtmoduls" zu verstehen, diese befindet sich also in dem jeweiligen Auswölbungsbereich 31, 32.

Weitere zusätzliche Bestandteile eines Integrations-Lichtmoduls 11, 12, beispielsweise auch Halteelemente (etwa Linsenträger) können gegebenenfalls auch in den Auswölbungsbereich 31, 32 ragen und fallen dann unter Begriff "vorderer Teil".

Wie man in Figur 3 gut erkennen kann, weist der vordere Teil des Integrations-Lichtmoduls 11 zu allen Seiten, also nach Vorne, oben und unten sowie seitlich einen Abstand größer Null zu der Auswölbungsbegrenzungsfläche 310 auf, wobei dieser Abstand vorzugsweise so gering wie möglich gehalten wird.

Nochmals zurückkommend auf **Figur 2** ist zu erkennen, dass die Integrations-Lichtmodule 11, 12 verschwenkbar in dem Fahrzeugscheinwerfer 1 gelagert sind. Prinzipiell ist es denkbar, dass ein Integrations-Lichtmodul dabei zur Einstellung einer Grundposition, z.B. manuell, verschwenkbar ist, oder dass die Integrations-Lichtmodule dynamisch, d.h. abhängig vom Fahrzustand des Kraftfahrzeuges verschwenkt werden. Auch eine kombinierte Verstellung ist möglich.

In **Figur 2** ist ein mechanisches Verschwenken der beiden Integrations-Lichtmodule 11, 12 jeweils um eine horizontale Verschwenkachse HH11 und eine vertikale Verschwenkachse VV11, VV12 pro Integrations-Lichtmodul 11, 12 dargestellt, wobei die Verschwenkachsen HH11, VV11, VV12 in den **Figuren 3 und 4** zu erkennen sind. Die Verschwenkachsen eines Integrations-Lichtmodul stehen dabei vorzugsweise normal aufeinander und schneiden einander bevorzugt, die horizontalen Verschwenkachsen HH11 verlaufen typischer Weise normal auf eine optische Achse X11, X12 des jeweiligen Integrations-Lichtmodul 11, 12. **Figur 2** zeigt dabei ein erstes kombiniertes Verstellsystem 200 - 204, umfassend ein Drehelement 200, welche z.B. in dem Gehäuse 2 um seine Längsachse drehbar gelagert ist und beispielsweise eine Werkzeugaufnahme etwa für einen Schraubenzieher o.ä. aufweist, welche von Außen zugänglich ist. Eine Verdrehbewegung des Drehelementes 200 wird über eine Gewindeanordnung 202 auf ein Koppelelement 201 übertragen, wobei die Drehbewegung des Drehelementes 200 in eine translatorische Bewegung des Koppelelementes 201 umgesetzt wird. Das Koppelelement 201 ist mit einer Koppelanordnung 203 mit dem Integrations-Lichtmodul 11, konkret mit einem Halteelemente 211 für das Integrations-Lichtmodul 11 und mit einer Koppelanordnung 204 mit dem Integrations-Lichtmodul 12, konkret mit einem Halteelemente 212 für das Integrations-Lichtmodul 12 verbunden. Eine translatorische Bewegung des Koppelelementes 201 führt zu einer Verschwenkbewegung des beiden Integrations-Lichtmodul 11, 12 um ihre jeweilige horizontale Verschwenkachse, von welchen lediglich eine in **Figur 3****,** dort mit dem Bezugszeichen HH11 versehen, dargestellt ist. Die Integrations-Lichtmodule 11, 12 werden somit in vertikaler Richtung, d.h. auf oder ab, verschwenkt. Eine Koppelanordnung 203, 204 kann dabei jeweils z.B. aus einem Kugelkopf gebildet sein, der in einer Führung, welche z.B. in Form eines geschlitzten Teilzylinders ausgebildet ist, geführt ist, sodass insbesondere ein Verschwenken von beiden Integrations-Lichtmodulen 11, 12 ohne Verklemmen möglich ist. Die Führung ist dabei Teil einer Kalotte, die mit dem Tragrahmen 211, 212 des Integrations-Lichtmoduls fix verbunden, z.B. verschraubt ist und in zwei Richtungen entsprechend den Verstellwegen des jeweiligen Integrations-Lichtmoduls gekrümmt sind. Die Verstellwege sind in Figur 3 und 4 strichliert dargestellt und mit den Bezugszeichen ZV11 sowie ZH11 und ZH12 strichliert bezeichnet.

**Figur 2** zeigt weiters ein zweites kombiniertes Verstellsystem 300 - 305, umfassend ein Drehelement 300, welche z.B. in dem Gehäuse 2 um seine Längsachse drehbar gelagert ist und beispielsweise eine Werkzeugaufnahme etwa für einen Schraubenzieher o.ä. aufweist, welche von Außen zugänglich ist. Eine Verdrehbewegung des Drehelementes 300 wird über eine Gewindeanordnung 302 (ein Gegengewinde für ein auf Drehelement 300 angeordnetes Gewinde ist in einer Halterung 305, die mit dem Gehäuse 2 fest verbunden ist oder einstückig mit diesem ausgebildet ist, angeordnet) auf ein Koppelelement 301 übertragen, wobei die Drehbewegung des Drehelementes 300 in eine translatorische Bewegung des Koppelelementes 301 umgesetzt wird. Das Koppelelement 301 ist mit einer Koppelanordnung 303 mit dem Integrations-Lichtmodul 11, konkret mit einem Halteelemente 211 für das Integrations-Lichtmodul 11 und mit einer Koppelanordnung 304 mit dem Integrations-Lichtmodul 12, konkret mit einem Halteelemente 212 für das Integrations-Lichtmodul 12 verbunden. Eine translatorische Bewegung des Koppelelementes 301 führt zu einer Verschwenkbewegung des beiden Integrations-Lichtmodul 11, 12 um ihre jeweilige vertikale Verschwenkachse VV11, VV12.

Die Integrations-Lichtmodule 11, 12 werden somit in horizontaler Richtung, d.h. nach links oder rechts, verschwenkt.

Eine Koppelanordnung 303, 304 kann dabei jeweils z.B. aus einem Kugelkopf gebildet sein, der in einer Führung, welche in Form eines geschlitzten Teilzylinders ausgebildet ist, geführt ist, sodass insbesondere ein Verschwenken von beiden Integrations-Lichtmodulen 11, 12 ohne Verklemmen möglich ist.

Bevorzugt ist vorgesehen, dass das jeweilige Integrations-Lichtmodul 11, 12 mit möglichst geringem Abstand zu seiner Auswölbungsbegrenzungsfläche 311, 312 angeordnet ist. Um ein unbehindertes Verschwenken des Integrations-Lichtmoduls 11, 12 zu erlauben, ist vorgesehen, dass die eine oder die mehreren Verschwenkachsen eines Integrations-Lichtmoduls 11, 12 in einem vorderen Bereich des Integrations-Lichtmoduls 11, 12, d.h. in einem Bereich des Integrations-Lichtmoduls 11, 12, welcher innerhalb des Auswölbungsbereiches 31, 32 liegt, verläuft bzw. verlaufen. Insbesondere ist es in diesem Zusammenhang günstig, wenn die Verschwenkachse(n) HH11, VV11, VV12 eines Integrations-Lichtmoduls 11, 12 durch einen Scheitelpunkt S dieses Integrations-Lichtmoduls, d.h. durch den vordersten Punkt des Integrations-Lichtmoduls, verlaufen.

Bei einem Integrations-Lichtmodul 11, 12 mit einer Optik, insbesondere einer Projektionsoptik bzw. Projektionslinse 11b, 12b wie gezeigt ist der Scheitelpunkt bzw. vorderste Punkt des Integrations-Lichtmoduls 11, 12 gleichzeitig der Scheitelpunkt S11, S12 der jeweiligen Projektionsvorrichtung/-linse 11b, 12b.

Außerdem ist es zweckmäßig, wenn wie in **Figuren 3 und 4** gezeigt, vorgesehen ist, dass sich jener Bereich des Integrations-Lichtmoduls 11, 12, welcher sich in dem Auswölbungsbereich 31, 32 befindet bzw. in diesen hineinragt, in Lichtaustrittsrichtung X bzw. in Richtung einer optischen Achse X11, X12, von dem Gehäuse 2 weggerichtet, weniger stark verjüngt als die Auswölbungsbegrenzungsfläche 310, 320 des Auswölbungsbereiches 31, 32 und/oder sich weniger stark verjüngt als die Blende 31b, 32b in dieser Richtung, und/oder sich jener Bereich des Integrations-Lichtmoduls 11, 12, welcher sich in dem Auswölbungsbereich 31, 32 befindet bzw. in diesen hineinragt, in Lichtaustrittsrichtung X bzw. in Richtung einer optischen Achse X11, X12, von dem Gehäuse 2 weggerichtet, zumindest in Ebenen, auf welche eine Verschwenkachse HH11; VV11, VV12 normal steht, weniger stark verjüngt als die Auswölbungsbegrenzungsfläche 310, 320 des Auswölbungsbereiches 31, 32 und/oder sich weniger stark verjüngt als die Blende 31b, 32b in dieser Richtung.

Auf diese Weise kann sichergestellt werden, dass bei einem Verschwenken keine Teile des Lichtmoduls an der Auswölbungsbegrenzungsfläche zur Anlage kommen.

Die Verjüngung der jeweiligen Bauteile ist mit den Bezugszeichen KL11, KA1, KA2 bzw. KL12, KA verdeutlicht.

Weiters ist mit Vorteil aus den oben genannten Gründen vorgesehen, dass eine Lichtaustrittsfläche des Integrations-Lichtmoduls, beispielsweise eine Lichtaustrittsfläche der Optik, insbesondere der Projektionsoptik bzw. der Projektionslinse 11b, 12b stärker gekrümmt ist als die Auswölbungsbegrenzungsfläche 310, 320 der zugeordneten Auswölbung 31, 32.

Zusammenfassend kann also vorgesehen sein, dass ein virtueller Drehpunkt (Schwenkachse) in den Scheitelpunkt der Linse gelegt wird.

Es ist somit möglich, die Auswölbungsbereich sehr kompakt, d.h. mit niedriger sichtbarer Höhe und/oder geringer Breite zu gestalten, da der Lichtaustrittskegel, der aus einem Integrations-Lichtmodul austritt, auch bei einem Verschwenken sehr geringe Auslenkungen erfährt.

Die Verschwenkung wurde oben an Hand von zwei Verstellsystemen, die kombiniert jeweils 2 Integrations-Lichtmodule um je eine Achse verschwenken, beschrieben. Es kann natürlich auch vorgesehen sein, dass ein Verschwenksystem jeweils lediglich zum Verschwenken um eine Achse eines Integrations-Lichtmoduls vorgesehen ist.

Das gezeigte Beispiel zeigt einen Fahrzeugscheinwerfer mit zwei Integrations-Lichtmodulen. Es kann natürlich auch vorgesehen sein, dass lediglich ein solche Integrations-Lichtmodul aber auch dass mehrere solcher Integrations-Lichtmodule in einem entsprechend ausgestalteten Scheinwerfer vorgesehen sind. Auch die Anordnung von herkömmlichen Lichtmodulen hinter der Basisfläche ist prinzipiell denkbar, hier aber nicht dargestellt.

## Patentansprüche

1. Kraftfahrzeugscheinwerfer (1) für ein Kraftfahrzeug, wobei der Kraftfahrzeugscheinwerfer (1) umfasst:
- ein Gehäuse (2) mit einer Gehäuseöffnung, welche Gehäuseöffnung (2a) von einer Abschlussscheibe (3) abgeschlossen ist, und
- ein oder mehrere in dem Gehäuse (2) angeordnete Lichtmodule (11, 12), welche zur Emission von Licht eingerichtet sind, welches Licht durch die Abschlussscheibe (3) durchtreten kann,
wobei
die Abschlussscheibe (3) eine Basisfläche (3a) sowie zumindest einen von der Basisfläche (3a) nach Außen gerichteten Auswölbungsbereich (31, 32) aufweist, wobei zumindest eines der Lichtmodule (11, 12) ein sogenannten Integrations-Lichtmodul ist, und
wobei ein Integrations-Lichtmodul (11, 12) derart in dem Fahrzeugscheinwerfer (1) angeordnet ist, dass zumindest ein Teil, insbesondere ein vorderer Teil des Integrations-Lichtmoduls (11, 12) in einen Auswölbungsbereich (31, 32) hinein ragt,
wobei der Auswölbungsbereich (31, 32), in welchen ein Integrations-Lichtmodul (11, 12) hineinragt, geometrisch derart bestimmt ist, dass in den Auswölbungsbereich (31, 32) hineinragende Bestandteile des Integrations-Lichtmoduls (11, 12) sich in einem Abstand größer Null zu einer den Auswölbungsbereich (31, 32) definierenden Auswölbungsbegrenzungsfläche (310, 320) befinden, und wobei die Abschlussscheibe (3) zumindest in dem Bereich oder den Bereichen der Auswölbungsbegrenzungsfläche bzw. Auswölbungsbegrenzungsflächen (310, 320) lichtdurchlässig ausgebildet ist, sodass von einem Integrations-Lichtmodul (11, 12) emittiertes Licht durch die Abschlussscheibe (3) austreten kann,
wobei
ein, vorzugsweise alle Integrations-Lichtmodule (11, 12) oder jeweils Bestandteile des jeweiligen Integrations-Lichtmoduls zumindest um eine Verschwenkachse, vorzugsweise um zwei Verschwenkachsen, verschwenkbar ist/sind,
**dadurch gekennzeichnet, dass**
zumindest eine der Verschwenkachsen oder beide Verschwenkachsen (HH11; VV11, VV12) in einem vorderen Bereich des Integrations-Lichtmoduls, d.h. in einem Bereich des Integrations-Lichtmoduls, welcher innerhalb des Auswölbungsbereiches (31, 32) liegt, verläuft bzw. verlaufen, wobei die zumindest eine Verschwenkachse oder alle Verschwenkachsen (HH11; VV11, VV12) eines Integrations-Lichtmoduls (11, 12) durch einen Scheitelpunkt (S11, S12) dieses Integrations-Lichtmoduls, d.h. durch den vordersten Punkt des Integrations-Lichtmoduls, verlaufen.

2. Kraftfahrzeugscheinwerfer nach Anspruch 1, wobei die gesamte Auswölbungsbegrenzungsfläche (310, 320) zumindest eines Auswölbungsbereiches, vorzugsweise aller Auswölbungsbereiche (31, 32) lichtdurchlässig ist.

3. Kraftfahrzeugscheinwerfer nach Anspruch 1 oder 2, wobei die Basisfläche (3a) der Abschlussscheibe (3) lichtundurchlässig ausgebildet ist.

4. Kraftfahrzeugscheinwerfer nach Anspruch 1 oder 2, wobei die Basisfläche (3a) der Abschlussscheibe (3) lichtdurchlässig ausgebildet ist, und wobei vorzugsweise in einem Inneren des Gehäuses (2) hinter der Abdeckscheibe (3), insbesondere hinter der Basisfläche (3a) eine lichtundurchlässige Blende angeordnet ist.

5. Kraftfahrzeugscheinwerfer nach einem der Ansprüche 1 bis 4, wobei einem Auswölbungsbereich (31, 32) genau ein Integrations-Lichtmodul (11, 12) zugeordnet ist.

6. Kraftfahrzeugscheinwerfer nach einem der Ansprüche 1 bis 5, wobei ein Integrations-Lichtmodul (11, 12) jeweils derart verschwenkbar ist, dass zumindest Bestandteile des Integrations-Lichtmoduls oder jene Bestandteile des Integrations-Lichtmoduls, die sich in einem Auswölbungsbereiche (31, 32) befinden, verschwenkbar sind.

7. Kraftfahrzeugscheinwerfer nach Anspruch 6, wobei das Integrations-Lichtmodul (11, 12) oder seine verschwenkbaren Bestandteile lediglich um eine horizontale Verschwenkachse (HH11) oder lediglich um eine vertikale Verschwenkachse (VV11, VV12), oder um eine vertikale Verschwenkachse (VV11, VV12) und eine horizontale Verschwenkachse (HH11) verschwenkbar ist/sind, wobei vorzugsweise die horizontale Verschwenkachse (HH, HH11) eines Integrations-Lichtmoduls (11, 12) quer zu einer optischen Achse (X11, X12) des Integrations-Lichtmoduls (11, 12), insbesondere normal zu der optischen Achse (X11, X12) verläuft.

8. Kraftfahrzeugscheinwerfer nach einem der Ansprüche 1 bis 7, wobei ein bzw. jedes Integrations-Lichtmodul (11, 12) eine Optik, insbesondere eine Abbildungs- bzw. Projektionsoptik, etwa in Form einer Linse, insbesondere einer Projektionslinse (11b, 12b) aufweist.

9. Kraftfahrzeugscheinwerfer nach einem der Ansprüche 1 bis 8, wobei beim Übergang von der Basisfläche (3a) in einen Auswölbungsbereich (31, 32) eine Öffnung in der Basisfläche (3a) vorgesehen ist, wobei vorzugsweise diese Öffnung von Blende, etwa einer ringförmigen Blende (31b) umgeben ist, wobei die ringförmige Blende (31b) in Form eines Teilringes oder eines geschlossenen Ringes ausgebildet ist, oder in Form eines in Richtung Gehäuseinnerem sich verjüngender Kegelmantel ausgebildet ist.

10. Kraftfahrzeugscheinwerfer nach einem der Ansprüche 1 bis 9, wobei sich jener Bereich des Integrations-Lichtmoduls (11, 12), welcher sich in dem Auswölbungsbereich (31, 32) befindet bzw. in diesen hineinragt, in Lichtaustrittsrichtung (X) bzw. in Richtung einer optischen Achse (X11, X12), von dem Gehäuse (2) weggerichtet, weniger stark verjüngt als die Auswölbungsbegrenzungsfläche (310, 320) des Auswölbungsbereiches (31, 32) und/oder sich weniger stark verjüngt als die Blende (31b) in dieser Richtung, und/oder sich jener Bereich des Integrations-Lichtmoduls (11, 12), welcher sich in dem Auswölbungsbereich (31, 32) befindet bzw. in diesen hineinragt, in Lichtaustrittsrichtung (X) bzw. in Richtung einer optischen Achse (X11, X12), von dem Gehäuse (2) weggerichtet, zumindest in Ebenen, auf welche eine Verschwenkachse (HH11; VV11, VV12) normal steht, weniger stark verjüngt als die Auswölbungsbegrenzungsfläche (310, 320) des Auswölbungsbereiches (31, 32) und/oder sich weniger stark verjüngt als die Blende (31b) in dieser Richtung.

11. Kraftfahrzeugscheinwerfer nach einem der Ansprüche 1 bis 10, wobei eine Lichtaustrittsfläche des Integrations-Lichtmoduls, beispielsweise eine Lichtaustrittsfläche der Optik, insbesondere Projektionsoptik bzw. Projektionslinse stärker gekrümmt ist als die Auswölbungsbegrenzungsfläche (310, 320) der zugeordneten Auswölbung (31, 32).

12. Kraftfahrzeugscheinwerfer nach einem der Ansprüche 1 bis 11, umfassend ein oder mehrere Verstellsysteme (200 - 204; 300 - 305), welches bzw. welche zum Verschwenken von zumindest einem Integrations-Lichtmodul (11, 12) um zumindest eine seiner Verschwenkachsen, vorzugsweise zum Verschwenken von zwei oder mehreren Integrations-Lichtmodulen (11, 12), insbesondere jeweils um eine Verschwenkachse des jeweiligen Integrations-Lichtmoduls, eingerichtet ist/sind.

13. Kraftfahrzeug mit zumindest einem Kraftfahrzeugscheinwerfer nach einem der Ansprüche 1 bis 12, wobei der zumindest eine Kraftfahrzeugscheinwerfer als Hauptscheinwerfer an einer Fahrzeugfront oder als Rückleuchte an einer Hinterseite des Kraftfahrzeuges angeordnet ist.

## Claims

1. Motor vehicle headlamp (1) for a motor vehicle, the motor vehicle headlamp (1) comprising
- a housing (2) with a housing opening, which housing opening (2a) is closed by a cover lens (3), and
- one or more light modules (11, 12) arranged in the housing (2), which are set up to emit light, which light can pass through the cover lens (3),
wherein
the cover lens (3) has a base surface (3a) and at least one bulging region (31, 32) directed outwards from the base surface (3a), at least one of the light modules (11, 12) being a so-called integration light module, and
an integrating light module (11, 12) being arranged in the vehicle headlamp (1) in such a way that at least a part, in particular a front part, of the integrating light module (11, 12) projects into a bulging region (31, 32),
wherein the bulging region (31, 32), into which an integrating light module (11, 12) projects, is geometrically determined in such a way that components of the integrating light module (11, 12) projecting into the bulging region (31, 32) are located at a distance greater than zero from a bulging boundary surface (310, 320) defining the bulging region (31, 32), and wherein the cover disk (3) is located at least in the region or regions of the bulging boundary surface or bulging boundary surfaces (310, 320). the cover lens (3) is designed to be translucent at least in the region or regions of the bulge boundary surface or bulge boundary surfaces (310, 320), so that light emitted by an integrating light module (11, 12) can emerge through the cover lens (3),
wherein
one, preferably all, integration light modules (11, 12) or components of the respective integration light module can be pivoted about at least one pivot axis, preferably about two pivot axes,
**characterized in that**
at least one of the pivot axes or both pivot axes (HH11; VV11, W12) extends in a front region of the integrating light module, i.e. in a region of the integrating light module which lies within the bulge region (31, 32), wherein the at least one pivot axis or all pivot axes (HH11; VV11, W12) of an integrating light module (11, 12) extend through an apex point (31, 32). wherein the at least one swivel axis or all swivel axes (HH11; VV11, VV12) of an integrating light module (11, 12) extend through an apex (S11, S12) of this integrating light module, i.e. through the foremost point of the integrating light module.

2. Motor vehicle headlamp according to claim 1, wherein the entire bulge delimiting surface (310, 320) of at least one bulge region, preferably of all bulge regions (31, 32), is translucent.

3. Motor vehicle headlamp according to claim 1 or 2, wherein the base surface (3a) of the cover lens (3) is designed to be opaque.

4. Motor vehicle headlamp according to claim 1 or 2, wherein the base surface (3a) of the cover lens (3) is designed to be translucent, and wherein an opaque diaphragm is preferably arranged in an interior of the housing (2) behind the cover lens (3), in particular behind the base surface (3a).

5. Motor vehicle headlamp according to one of claims 1 to 4, wherein exactly one integration light module (11, 12) is assigned to a bulge region (31, 32).

6. Motor vehicle headlamp according to one of claims 1 to 5, wherein an integrating light module (11, 12) is pivotable in each case such that at least components of the integrating light module or those components of the integrating light module which are located in a bulge region (31, 32) are pivotable.

7. Motor vehicle headlamp according to claim 6, wherein the integrating light module (11, 12) or its pivotable components are pivotable only about a horizontal pivot axis (HH11) or only about a vertical pivot axis (VV11, W12), or about a vertical pivot axis (VV11, VV12) and a horizontal swivel axis (HH11), wherein preferably the horizontal swivel axis (HH, HH11) of an integrating light module (11, 12) extends transversely to an optical axis (X11, X12) of the integrating light module (11, 12), in particular normal to the optical axis (X11, X12).

8. Motor vehicle headlamp according to one of claims 1 to 7, wherein one or each integrating light module (11, 12) has an optical system, in particular an imaging or projection optical system, for example in the form of a lens, in particular a projection lens (11b, 12b).

9. Motor vehicle headlamp according to one of claims 1 to 8, wherein an opening is provided in the base surface (3a) at the transition from the base surface (3a) into a bulge region (31, 32), wherein preferably this opening is surrounded by a diaphragm, for example an annular diaphragm (31b), wherein the annular diaphragm (31b) is designed in the form of a partial ring or a closed ring, or is designed in the form of a conical casing tapering in the direction of the housing interior.

10. Motor vehicle headlamp according to one of claims 1 to 9, wherein that region of the integrating light module (11, 12), which is located in the bulging region (31, 32) or projects into it, tapers less in the direction of light emission (X) or in the direction of an optical axis (X11, X12), directed away from the housing (2), than the bulging boundary surface (310, 320) of the bulging region, in the direction of an optical axis (X11, X12), directed away from the housing (2), tapers less strongly than the bulge limiting surface (310, 320) of the bulge region (31, 32) and/or tapers less strongly than the aperture (31b) in this direction, and/or that region of the integrating light module (11, 12) which is located in the bulge region (31, 32) and/or projects into it, tapers in the direction of light emission (X) or in the direction of the optical axis (X11, X12). in the direction of light emission (X) or in the direction of an optical axis (X11, X12), directed away from the housing (2), at least in planes to which a pivot axis (HH11; VV11, W12) is normal, tapers less strongly than the bulge boundary surface (310, 320) of the bulge region (31, 32) and/or tapers less strongly than the diaphragm (31b) in this direction.

11. Motor vehicle headlamp according to one of claims 1 to 10, wherein a light-emitting surface of the integrating light module, for example a light-emitting surface of the optics, in particular projection optics or projection lens, is more strongly curved than the bulge-limiting surface (310, 320) of the associated bulge (31, 32).

12. Motor vehicle headlamp according to one of claims 1 to 11, comprising one or more adjustment systems (200 - 204; 300 - 305), which is/are set up for pivoting at least one integrating light module (11, 12) about at least one of its pivot axes, preferably for pivoting two or more integrating light modules (11, 12), in particular in each case about a pivot axis of the respective integrating light module.

13. Motor vehicle with at least one motor vehicle headlamp according to one of claims 1 to 12, wherein the at least one motor vehicle headlamp is arranged as a main headlamp on a vehicle front or as a rear lamp on a rear side of the motor vehicle.

## Revendications

1. Projecteur de véhicule automobile (1) pour un véhicule automobile, le projecteur de véhicule automobile (1) comprenant :
- un boîtier (2) avec une ouverture de boîtier, laquelle ouverture de boîtier (2a) est fermée par une vitre de fermeture (3), et
- un ou plusieurs modules d'éclairage (11, 12) disposés dans le boîtier (2), qui sont conçus pour émettre de la lumière, laquelle lumière peut traverser la glace de fermeture (3),
où
la glace (3) présente une surface de base (3a) ainsi qu'au moins une zone bombée (31, 32) orientée vers l'extérieur à partir de la surface de base (3a), au moins l'un des modules lumineux (11, 12) étant un module lumineux dit d'intégration, et
un module de lumière d'intégration (11, 12) étant disposé dans le projecteur de véhicule (1) de telle sorte qu'au moins une partie, en particulier une partie avant du module de lumière d'intégration (11, 12), pénètre dans une zone de courbure (31, 32),
la zone de bombement (31, 32), dans laquelle un module lumineux d'intégration (11, 12) fait saillie, étant déterminée géométriquement de telle sorte que des composants du module lumineux d'intégration (11, 12) faisant saillie dans la zone de bombement (31, 32) se trouvent à une distance supérieure à zéro d'une surface de limitation de bombement (310, 320) définissant la zone de bombement (31, 32), et la vitre de fermeture (3) étant fixée au moins dans la zone ou les zones de la ou des surfaces de limitation de bombement (310, 320). (310, 320), de sorte que la lumière émise par un module de lumière d'intégration (11, 12) peut sortir à travers la vitre de fermeture (3),
où
un, de préférence tous les modules de lumière d'intégration (11, 12) ou des composants respectifs du module de lumière d'intégration respectif peuvent pivoter au moins autour d'un axe de pivotement, de préférence autour de deux axes de pivotement,
**caractérisé en ce que**
au moins l'un des axes de pivotement ou les deux axes de pivotement (HH11 ; VV11, W12) s'étend ou s'étendent dans une zone avant du module d'intégration de lumière, c'est-à-dire dans une zone du module d'intégration de lumière qui se trouve à l'intérieur de la zone de courbure (31, 32). l'au moins un axe de pivotement ou tous les axes de pivotement (HH11 ; VV11, W12) d'un module d'éclairage d'intégration (11, 12) passent par un sommet (S11, S12) de ce module d'éclairage d'intégration, c'est-à-dire par le point le plus avancé du module d'éclairage d'intégration.

2. Projecteur de véhicule automobile selon la revendication 1, dans lequel l'ensemble de la surface de délimitation de la protubérance (310, 320) d'au moins une zone de protubérance, de préférence de toutes les zones de protubérance (31, 32), est transparent à la lumière.

3. Projecteur de véhicule automobile selon la revendication 1 ou 2, dans lequel la surface de base (3a) de la glace de fermeture (3) est opaque.

4. Projecteur de véhicule automobile selon la revendication 1 ou 2, dans lequel la surface de base (3a) de la glace de fermeture (3) est translucide, et dans lequel, de préférence, un écran opaque est disposé à l'intérieur du boîtier (2) derrière la glace de fermeture (3), notamment derrière la surface de base (3a).

5. Projecteur de véhicule automobile selon l'une des revendications 1 à 4, dans lequel exactement un module d'éclairage d'intégration (11, 12) est associé à une zone de bombage (31, 32).

6. Projecteur de véhicule automobile selon l'une quelconque des revendications 1 à 5, dans lequel un module d'éclairage d'intégration (11, 12) peut pivoter respectivement de telle sorte qu'au moins des composants du module d'éclairage d'intégration ou les composants du module d'éclairage d'intégration qui se trouvent dans une zone bombée (31, 32) peuvent pivoter.

7. Projecteur de véhicule automobile selon la revendication 6, dans lequel le module d'éclairage d'intégration (11, 12) ou ses composants pivotants peuvent pivoter uniquement autour d'un axe de pivotement horizontal (HH11) ou uniquement autour d'un axe de pivotement vertical (W11, W12), ou autour d'un axe de pivotement vertical (VV11, W12) et un axe de pivotement horizontal (HH11), l'axe de pivotement horizontal (HH, HH11) d'un module d'éclairage d'intégration (11, 12) étant de préférence transversal à un axe optique (X11, X12) du module d'éclairage d'intégration (11, 12), en particulier normal à l'axe optique (X11, X12).

8. Projecteur de véhicule automobile selon l'une quelconque des revendications 1 à 7, dans lequel un ou chaque module lumineux d'intégration (11, 12) comporte une optique, notamment une optique d'imagerie ou de projection, par exemple sous la forme d'une lentille, notamment une lentille de projection (11b, 12b).

9. Projecteur de véhicule automobile selon l'une des revendications 1 à 8, dans lequel une ouverture est prévue dans la surface de base (3a) lors du passage de la surface de base (3a) à une zone de courbure (31, 32), cette ouverture étant de préférence entourée par un écran, par exemple un écran annulaire (31b), l'écran annulaire (31b) étant réalisé sous la forme d'un anneau partiel ou d'un anneau fermé, ou sous la forme d'une enveloppe conique se rétrécissant en direction de l'intérieur du boîtier.

10. Projecteur de véhicule automobile selon l'une des revendications 1 à 9, dans lequel la zone du module d'éclairage d'intégration (11, 12) qui se trouve dans la zone bombée (31, 32) ou qui pénètre dans celle-ci, s'amincit dans la direction de sortie de la lumière (X) ou dans la direction de l'axe optique (A), dans la direction d'un axe optique (X11, X12), en s'éloignant du boîtier (2), se rétrécit moins que la surface de délimitation du bombement (310, 320) de la zone de bombement (31, 32) et/ou se rétrécit moins que le diaphragme (31b) dans cette direction, et/ou la zone du module lumineux d'intégration (11, 12) qui se trouve dans la zone de bombement (31, 32) ou qui s'éloigne du boîtier (2) se rétrécit moins que la surface de délimitation du bombement (310, 320). dans celle-ci, dans la direction de sortie de la lumière (X) ou dans la direction d'un axe optique (X11, X12), en s'éloignant du boîtier (2), au moins dans des plans sur lesquels un axe de pivotement (HH11 ; VV11, W12) est normal, se rétrécit moins que la surface de délimitation du bombement (310, 320) de la zone de bombement (31, 32) et/ou se rétrécit moins que le diaphragme (31b) dans cette direction.

11. Projecteur de véhicule automobile selon l'une des revendications 1 à 10, dans lequel une surface de sortie de lumière du module d'éclairage d'intégration, par exemple une surface de sortie de lumière de l'optique, en particulier de l'optique de projection ou de la lentille de projection, est plus fortement incurvée que la surface de délimitation de bombement (310, 320) du bombement associé (31, 32).

12. Projecteur de véhicule automobile selon l'une quelconque des revendications 1 à 11, comprenant un ou plusieurs systèmes de réglage (200-204 ; 300-305) agencés pour faire pivoter au moins un module lumineux d'intégration (11, 12) autour d'au moins un de ses axes de pivotement, de préférence pour faire pivoter deux ou plusieurs modules lumineux d'intégration (11, 12), notamment chacun autour d'un axe de pivotement du module lumineux d'intégration correspondant.

13. Véhicule automobile comportant au moins un projecteur de véhicule automobile selon l'une quelconque des revendications 1 à 12, ledit au moins un projecteur de véhicule automobile étant agencé en tant que projecteur principal sur une face avant du véhicule ou en tant que feu arrière sur une face arrière du véhicule automobile.
